# EUROPEAN PATENT SPECIFICATION

(11) **EP 2 836 548 B1**
(45) Date of publication and mention of the grant of the patent: **12.06.2019**
(21) Application number: 13709704.4
(22) Date of filing: 05.03.2013
(51) Int. Cl.: C08L 33/12, C08L 69/00, B29C 48/00, B29C 43/22, B29C 43/24, B29C 45/00, C08J 3/00

(54) **POLYCARBONATE BLEND ARTICLES AND METHOD OF PRODUCING THE SAME**
POLYCARBONATMISCHARTIKEL UND VERFAHREN ZUR HERSTELLUNG DAVON
ARTICLES EN MÉLANGE À BASE DE POLYCARBONATE, ET LEUR PROCÉDÉ DE FABRICATION

(30) Priority: 10.04.2012 US 201261622373 P
(43) Date of publication of application: 18.02.2015
(73) Proprietor: Rohm and Haas Company, Philadelphia, PA 19106 (US)
(72) Inventor: NELLIAPPAN, Veera, G., North Wales, PA 19454 (US); LUNDQUIST, Eric, G., North Wales, PA 19454 (US); SAINT-GERARD, Yannick, F-06330 Roqueford-les-Pins (FR)
(74) Representative: Houghton, Mark Phillip
(86) International application number: PCT/US2013/028964
(87) International publication number: WO 2013/154693

(56) References cited:
- EP-A1- 1 932 885
- EP-A2- 0 483 717
- US-A- 4 758 626
- US-A- 4 906 696

## Description

### Field of Invention

The instant invention relates to a scratch resistant articles made from polycarbonate blends and method of making the same.

### Background of the Invention

Generally, polycarbonate (PC) compositions exhibit properties such as high impact strength, flame retardancy and good transparency and for these reasons are the engineering resin of choice in electronic, appliance and automotive applications. Unfortunately, polycarbonate compositions have poor scratch resistance. One method of dealing with poor scratch resistance entails an expensive hard coating step in which a protective coating is applied to the surface of a PC article. Thus, a less expensive additive which could be blended with PC to produce a scratch resistant PC would be of commercial value.

Blends of polycarbonates and polymethyl methacrylate (co)polymers are known and have been investigated as a method of improving the scratch resistance of PC. Unfortunately, blends of PC and typical polymethyl methacrylates (PMMAs) are frequently opaque which is not acceptable for semi-transparent or transparent applications, and they often suffer from poor mechanical properties.

Moreover, PC and PMMA are immiscible in most proportions, and blends thereof are opaque over wide composition ranges and do not possess the advantageous properties exhibited by either polymer.

Techniques of overcoming the drawbacks associated with the immiscibility of typical PC/PMMA blends have been previously proposed. Among such techniques is the addition of copolymer additives, such as PMMA/acrylamide copolymers and PMMA-ester copolymers containing carbocyclic groups and the use of a block copolymer of PC and PMMA instead of a physical mixture of the two components.

EP1932885 discloses a scratch resistant flame-retardant thermoplastic resin composition comprising: 100 parts by weight of a base resin comprising (A) about 1 to about 99 % by weight of a polycarbonate resin and (B) about 99 to about 1 % by weight of a modified methacrylate resin; and (C) about 1 to about 50 parts by weight of a flame retardant. EP0483717 discloses a copolymer (A) which comprises 50 to 98% by weight of units from methyl methacrylate, 2 to 50% by weight of units from an acrylate and/or methacrylate having a halogen-substituted aromatic ring, and 0 to 25% by weight of units from other copolymerizable alpha, beta - substituted monomer, and an aromatic polycarbonate (B).

A need exists for a modified PC composition, having an increase of three to four levels of hardness on the pencil hardness scale over the unmodified PC composition, that eliminates the need for a hard coating step and articles and methods of making such articles comprising such blends.

### Summary of the Invention

The invention is set out in accordance with the appended claims. The instant invention provides a scratch resistant polycarbonate article and methods of making the same.

In one embodiment, the instant invention provides a scratch resistant article comprising a blend which comprises from 50 to 95 percent by weight polycarbonate; and from 5 to 50 percent by weight modified methyl methacrylate polymer, wherein the modified methyl methacrylate polymer is selected from the group consisting of methyl methacrylate homopolymer, methyl methacrylate copolymers and combinations thereof; wherein the modified polymer has one or more end groups provided by reaction with one or more chain transfer agents selected from the group consisting of mercapto esters; and wherein the modified methyl methacrylate polymer has a weight average molecular weight, Mw, from 5,000 to 100,000 g/mole as measured by gel permeation chromatography against narrow molecular weight polystyrene standards in tetrahydrofuran solvent at 25° C using Polymer Laboratories' data manipulation software; and wherein the blend exhibits a pencil hardness equal to or greater than F measured according to ASTM D3363 - 05.

In an alternative embodiment, the instant invention further provides a method for making a scratch resistant article comprising: forming a blend by melt blending, the blend comprising from 50 to 95 weight percent polycarbonate and from 5 to 50 weight percent modified methyl methacrylate polymer; wherein the modified methyl methacrylatemethyl methacrylate polymer has one or more end groups provided by reaction with one or more chain transfer agents selected from the group consisting of mercapto esters; and wherein the modified methyl methacrylate polymer has an Mw equal from 5,000 to 100,000 g/mole as measured by gel permeation chromatography against narrow molecular weight polystyrene standards in tetrahydrofuran solvent at 25° C using Polymer Laboratories' data manipulation software and wherein the blend exhibits a pencil hardness equal to or greater than F measured according to ASTM D3363 - 05; and forming the scratch resistant article from the blend by one or more methods selected from the group consisting of extrusion molding, press molding, and calendaring.

### Detailed Description of Embodiments of the Invention

The following abbreviations are used herein:
"PMMA" means polymethmethacrylate;
"PC" means polycarbonate;
"BMP" means butyl mercapto propionate;
"MMA" means methyl methacrylate;
"(meth)acrylate" means acrylate or methacrylate;
"CHMA" means cyclohexmethyl methacrylate;
"nDDM" means normal dodecylmercaptan;
The instant invention provides a scratch resistant polycarbonate article and method of making the same.

The scratch resistant article according to the present invention comprises a blend which comprises from 50 to 95 percent by weight polycarbonate; and from 5 to 50 percent by weight modified methyl methacrylatemethyl methacrylate polymer, wherein the modified methyl methacrylatemethyl methacrylate polymer is selected from the group consisting of methyl methacrylatemethyl methacrylate homopolymer, methyl methacrylatemethyl methacrylate copolymers and combinations thereof; wherein the modified methyl methacrylatemethyl methacrylate polymer has one or more end groups provided by reaction with one or more chain transfer agents selected from the group consisting of mercapto esters; wherein the modified methyl methacrylatemethyl methacrylate polymer has a Mw from 5,000 to 100,000 g/mole as measured by gel permeation chromatography against narrow molecular weight polystyrene standards in tetrahydrofuran solvent at 25° C using Polymer Laboratories' data manipulation software; and wherein the blend exhibits a pencil hardness equal to or greater than F measured according to ASTM D3363 - 05.

In an alternative embodiment, the instant invention further provides a method for making a scratch resistant article comprising forming a blend by melt blending, the blend comprising from 50 to 95 weight percent polycarbonate and from 5 to 50 weight percent modified methyl methacrylatemethyl methacrylate polymer; wherein the modified methyl methacrylatemethyl methacrylate polymer has one or more end groups provided by reaction with one or more chain transfer agents selected from the group consisting of mercapto esters; and wherein the modified methyl methacrylate polymer has an Mw equal from 5,000 to 100,000 g/mole as measured by gel permeation chromatography against narrow molecular weight polystyrene standards in tetrahydrofuran solvent at 25° C using Polymer Laboratories' data manipulation software and wherein the blend exhibits a pencil hardness equal to or greater than F measured according to ASTM D3363 - 05; and forming the scratch resistant article from the blend by one or more methods selected from the group consisting of extrusion molding, press molding, and calendaring.

All individual values and subranges from 50 to 95 percent by weight polycarbonate are included herein and disclosed herein; for example, the amount of PC in the blend can be from a lower limit of 50, 60, 70, 80 or 90 percent by weight to an upper limit of 55, 65, 75, 85 or 95 weight percent. For example, the amount of PC in the blend may be in the range of from 50 to 95 weight percent, or in the alternative, the amount of PC in the blend may be in the range of from 55 to 85 weight percent, or in the alternative, the amount of PC in the blend may be in the range of from 75 to 95 weight percent.

All individual values and subranges from 5 to 50 percent by weight modified methacrylatemethyl methacrylate polymer are included herein and disclosed herein; for example, the amount of modified methyl methacrylate can be from a lower limit of 5, 15, 25, 35 or 45 weight percent to an upper limit of 10, 20, 30, 40 or 50 weight percent. For example, the amount of modified methyl methacrylate polymer in the blend may be in the range of from 5 to 50 weight percent, or in the alternative, the amount of modified methyl methacrylate polymer may be in the range of from 15 to 45 weight percent, or in the alternative, the amount of modified methyl methacrylate polymer may be in the range of from 5 to 25 weight percent.

The modified methyl methacrylate polymer useful in embodiments of the inventive blend is selected from the group consisting of modified methyl methacrylatehomopolymer, modified methyl methacrylate copolymers and combinations thereof.

The term "modified" as used herein means that the methyl methacrylatemethyl polymer (modified methyl methacrylate homopolymer, modified methyl methacrylate copolymers or combinations thereof) has one or more end groups provided by reaction with one or more chain transfer agents selected from the group consisting of mercapto esters. Disclosed but not claimed, the one or more chain transfer agents are selected from the group consisting of cycloalkyl and substituted cycloalkyl thiols, hydroxyl thiols, aryl and substituted aryl thiols, and aminoalkyl thiols. Chain transfer agents utilized in the present invention are added to the free radical polymerization process. The use and mechanism of chain transfer agents is well known to those skilled in the art with the majority of the chain transfer agent ending up at the end of the polymer chain. By careful selection of chain transfer agent used in the polymerization of the (meth)acrylate monomers, the interaction of the poly methyl methacrylate with the polycarbonate may be influenced, giving a blend which has good scratch resistance, clarity and impact performance.

Mercapto esters, as the term is used herein, include those compounds having a moiety HS-X-C(=O)O-R or HS-X-OC(=O)R wherein X is a substituted or unsubstituted hydrocarbyl group having a valency of at least two, and R is an alkyl or aryl moeity. In embodiments of the inventive blend and/or method, one or more suitable mercapto esters may be used.

Exemplary mercapto esters include, but are not limited to, butylmercaptopropionate, methylmercaptopropionate, 2-ethylhexylthioglycolate, methylthioglycolate, ethylthioglycolate, mercaptoethyloleate, and mercaptoethyltallate,
Exemplary cycloalkyl thiols and substituted cycloalkyl thiols (not according to the invention) include, but are not limited to, furfuryl mercaptan, cyclohexane thiol, and 2-furanmethane thiol.
Exemplary aryl and substituted aryl thiols (not according to the invention) include, but are not limited to, benzene thiol, benzyl mercaptan, 2 or 4 bromobenzyl mercaptan, 2,4,6- trimethyl benzyl mercaptan, 2 or 4-aminothiophenol, and thiophenol
Exemplary hydroxyl alkyl thiols (not according to the invention) include, but are not limited to, 6-mercapto-1-hexanol, 4-mercapto-1-butanol, 8-mercapto-1-octanol. 1-thioglycerol, mercaptoethanol
Exemplary amine thiols (not according to the invention) include, but are not limited to, 4-acetamidothiophenol, amionoethanethiol.

In an alternative embodiment, the instant invention provides a scratch resistant article and method of making the same, in accordance with any of the preceding embodiments, except that the polycarbonate is a Bisphenol A- type and/or commercial type polycarbonate having a weight average molecular weight (Mw) from 10,000 to 250,000 g/mole. All subranges and values from 10,000 to 250,000 g/mole are included herein and disclosed herein. For example, the polycarbonate may have a Mw from 10,000 to 250,000 g/mole, or in the alternative, the polycarbonate may have a Mw from 20,000 to 100,000 g/mole, or in the alternative, the polycarbonate may have a Mw from 30,000 to 90,000 g/mole, or in the alternative, the polycarbonate may have a Mw from 50,000 to 100,000 g/mole.

In an alternative embodiment, the instant invention provides a scratch resistant article and method of making the same, in accordance with any of the preceding embodiments, except that the chain transfer agent is selected from the group consisting of butylmercaptopropionate, methylmercaptopropionate, and 2-ethylhexyl thioglycolate.

Modified methyl methacrylate copolymers useful in embodiments of the inventive blend include copolymers of methyl methacrylate and one or more comonomers selected from the group consisting of (cyclo)alkyl (meth)acrylates, alkyl (meth)acrylates, aryl (meth)acrylates, styrene, and substituted styrene based monomers. In particular embodiments of the inventive blend, the methyl methacrylate copolymer comprises units derived from one or more comonomers selected from the group consisting of cyclohexyl methacrylate, isobornyl methacrylate, tetrahydrofurfuryl methacrylate, cyclopentyl methacrylate, trifluoroethylmethacrylate, hydroxyethylmethacrylate and dicyclopentadienyl methacrylate.

The methyl methacrylate copolymer useful in certain embodiments of the inventive blend comprises equal to or greater than 70 percent by weight derived from methyl methacrylate units and from greater than one and equal to or less than 30 percent by weight derived from of one or more comonomers. All individual values and subranges from at least 70 percent by weight derived from methyl methacrylate units are included herein and disclosed herein; for example, the amount derived from methyl methacrylate units can be from a lower limit of 70, 75, 80, 85, 90, 95 or 98weight percent. All individual values and subranges from greater than one to less than 30 percent by weight derived from one or more comonomer units are included herein and disclosed herein; for example, the amount derived from comonomer units can be from a lower limit of 1.5, 5, 10, 20, or 25 weight percent to an upper limit of 2, 7.5, 15, 25 or 29 weight percent.

The instant invention provides a scratch resistant article and method of making the same, in accordance with any of the preceding embodiments, except that the modified methyl methacrylate polymer has a Mw from 5,000 to 100,000 g/mole. All individual values and subranges from 5,000 to 100,000 g/mole are included herein and disclosed herein; for example, the Mw can be from a lower limit of 5,000; 25,000; 35,000; 45,000; 55,000; 65,000; 75,000; 85,000; or 95,000 g/mole to an upper limit of 10,000; 20,000; 30,000; 40,000; 50,000; 60,000; 70,000; 80,000; 90,000 or 100,0000 g/mole. For example, the Mw may be in the range of from 5,000 to 100,000 g/mole, or in the alternative, the Mw may be in the range of from 25,000 to 75,000 g/mole, or in the alternative, the Mw may be in the range of from 55,000 to 95,000 g/mole.

The instant invention provides a scratch resistant article and method of making the same, in accordance with any of the preceding embodiments, except that the inventive blend exhibits a pencil hardness equal to or greater than F measured according to ASTM D3363 - 05. All individual values and subranges from equal to or greater than F are included herein and disclosed herein; for example, the blend pencil hardness can be equal to or greater than F, or in the alternative, the blend pencil hardness can be equal to or greater than H.

In an alternative embodiment, the instant invention provides a scratch resistant article and method of making the same, in accordance with any of the preceding embodiments, except that a test sample made from the blend and measured according to ASTM D1003-11 has a haze of equal to or less than 50%. All individual values and subranges from equal to or less than 50% are included herein and disclosed herein; for example, the haze can be from an upper limit of 5%, 10%, 20%, 30%, 40% or 50%.

In an alternative embodiment, the instant invention provides a blend, and method of producing the same, in accordance with any of the preceding embodiments, except that the modified methyl methacrylate polymer is formed from the reaction of from 0.2 to 10 weight percent chain transfer agent based on the total weight of the methyl methacrylate polymer. All individual values and subranges from 0.2 to 10 weight percent are included herein and disclosed herein; for example, the amount of chain transfer agent used to form the modified methyl methacrylate polymer can be from a lower limit of 0.2, 0.5, 1, 2, 4, 6, 8, or 9 weight percent to an upper limit of 1, 3, 5, 7, 9, or 10 weight percent. For example, the amount of chain transfer agent used to form the modified methyl methacrylate polymer may be in the range of from 0.5 to 10 weight percent, or in the alternative, the amount of chain transfer agent used to form the modified methyl methacrylate polymer may be in the range of from 2 to 10 weight percent, or in the alternative, the amount of chain transfer agent used to form the modified methyl methacrylate polymer may be in the range of from 5 to 10 weight percent, or in the alternative, the amount of chain transfer agent used to form the modified methyl methacrylate polymer may be in the range of from 1 to 5 weight percent,

In an alternative embodiment, the instant invention provides a scratch resistant article and method of making the same, in accordance with any of the preceding embodiments, except that the modified methyl methacrylate polymer has an index of refraction of less than 1.52, alternatively less than 1.51, alternatively less than 1.50.

In an alternative embodiment, the instant invention provides a scratch resistant article and method of making the same, in accordance with any of the preceding embodiments, except that the modified methyl methacrylate is prepared by one or more standard free radical polymerization techniques selected from the group consisting of emulsion polymerization, suspension polymerization, dispersion polymerization, bulk polymerization, and solution polymerization. In one embodiment, the modified methyl methacrylate polymer is prepared by solution polymerization.

The instant invention provides a scratch resistant article and method of making the same, in accordance with any of the preceding embodiments, except that the blend has a pencil hardness of equal to or greater than F measured according to ASTM D3363 - 05.

In an alternative embodiment, the instant invention provides a scratch resistant article, and method of making the same, in accordance with any of the preceding embodiments, except that the modified methyl methacrylate copolymer comprises equal to or greater than 70 percent by weight methyl methacrylate units and between greater than one and equal to or less than 30 percent by weight of one or more monomers selected from the group consisting of, alkyl (meth)acrylates, aryl (meth)acrylates, styrene, substituted styrene based monomers.

In an alternative embodiment, the instant invention provides a scratch resistant article and method of making the same, in accordance with any of the preceding embodiments, except that the article is selected from the group consisting of lenses, films, sheets, face shields, windows, dust covers, wind screens, screens, structural components, electronic components, construction materials, medical devices, data storage devices, automotive components, aircraft components, marine components, lighting components, storage components, communication equipment, solar energy components, photography equipment, video equipment, holographic materials, optical devices, and small appliance components.

In an alternative embodiment, the instant invention provides a scratch resistant article and method of making the same, in accordance with any of the preceding embodiments, except that the article is produced by one or more methods selected from the group consisting of calendaring, extrusion, compression molding and injection molding.

In an alternative embodiment, the instant invention provides a scratch resistant article and method of making the same, in accordance with any of the preceding embodiments, except that the article is produced by one or more methods selected from the group consisting of extrusion, lamination, co-extrusion, cast extrusion, and blow molding.

The ingredients of the polymer blends can be mixed or blended using methods known to a person of ordinary skill in the art, preferably methods that can provide a substantially homogeneous distribution of the modified methyl methacrylate in the polycarbonate. Nonlimiting examples of suitable blending methods include melt blending and melt kneading, for example, in an extruder, and the like.

The articles may be made using any one or more of the methods discussed herein in a continuous or a discrete manner following the blending. Such methods to form an article comprising the blend include any appropriate method known to one of ordinary skill in the art, including, for example, calendaring, extrusion, compression molding, injection molding, co-extrusion, cast extrusion, and blow molding. For example, multi-layered sheets in which one or more of the layers comprises a blend of modified methyl methacrylate and polycarbonate may be made by first forming the blend by melt kneading in an extruder followed by co-extrusion with or onto another layer of appropriate material. Alternatively, the blend may be produced by melt blending and/or melt kneading with the formation of the article being accomplished in a separate process.

In an alternative embodiment, the instant invention provides a scratch resistant article and method of making the same, in accordance with any of the preceding embodiments, except that the blend further comprises one or more components selected from the group consisting of flame retardants, pigments, primary antioxidants, secondary antioxidants, processing aids, impact modifiers, UV stabilizers, plasticizers, blends thereof, and combinations thereof.

In an alternative embodiment, the scratch resistant article comprises a blend which consists essentially of from 50 to 95 percent by weight polycarbonate; and from 5 to 50 percent by weight modified methyl methacrylate polymer, wherein the modified methyl methacrylate polymer is selected from the group consisting of methyl methacrylate homopolymer, methyl methacrylate copolymers and combinations thereof; wherein the modified methyl methacrylate polymer has one or more end groups of mercapto esters, cycloalkyl and substituted cycloalkyl thiols, hydroxyl thiols, aryl and substituted aryl thiols, and aminoalkyl thiols wherein the modified methyl methacrylate polymer has a Mw from 5,000 to 100,000 g/mole; and wherein the blend exhibits a pencil hardness equal to or greater than F measured according to ASTM D3363 - 05.

In yet another alternative embodiment, the instant invention further provides a method for making a scratch resistant article consisting essentially of: forming a blend by melt blending, the blend comprising from 50 to 95 weight percent polycarbonate and from 5 to 50 weight percent modified methyl methacrylate polymer; wherein the modified methyl methacrylate polymer has one or more end groups provided by reaction with one or more chain transfer agents selected from the group consisting of mercapto esters, and wherein the modified methyl methacrylate polymer has a Mw from 5,000 to 100,000 g/mole; and wherein the blend exhibits a pencil hardness equal to or greater than F measured according to ASTM D3363 - 05; and forming the scratch resistant article from the blend by one or more methods selected from the group consisting of extrusion molding, press molding, and calendaring.

In an alternative embodiment, the instant invention provides a scratch resistant article and method of making the same, in accordance with any of the preceding embodiments, except that the blend is thermodynamically miscible at most composition ranges. As used herein, the term "thermodynamically miscible" refers to a polymer blend that is mixed on the molecular level forming a single, homogeneous phase which exhibits only one glass transition.

In an alternative embodiment, the instant invention provides a scratch resistant article and method of making the same in accordance with any of the preceding embodiments, except that the blend exhibits more than one glass transition.

In an alternative embodiment, the instant invention provides a scratch resistant article, and method of making the same, in accordance with any of the preceding embodiments, except that the blend does not comprise any units derived from a crosslinker. Such crosslinkers which are not present in particular embodiments of the blend or used in embodiments of the method, include, for example, divinylbenzene; vinyl group-containing monomers including; allyl compounds including allyl (meth)acrylate, diallyl fumarate, diallyl phthalate, diallylacrylamide, triallyl (iso)cyanurate, and triallyl trimelitate; (poly)alkylene glycol di(meth)acrylate compounds including ethylene glycol dimethacrylate (EGDMA), diethylene glycol dimethacrylate, 1,6-hexanediol di(meth)acrylate, (poly)ethylene glycol di(meth)acrylate, (poly)propylene glycol di(meth)acrylate, (poly)tetramethylene glycol di(meth)acrylate, pentaerythritol tetra(meth)acrylate, pentaerythritol tri(meth)acrylate, pentaerythritol di(meth)acrylate, trimethylolpropane tri(meth)acrylate, dipentaerythritol hexa(meth)acrylate, dipentaerythritol penta(meth)acrylate, and glycerol tri(meth)acrylate and mixtures and combination thereof.

### Example

The following example illustrates the present invention but is not intended to limit the scope of the invention.

### Example 1

### Preparation of copolymer of methyl methacrylate and cyclohexyl methacrylate polymer (Mod. MMA 1) using a solution polymerization process

1000 g of methyl ethyl ketone (MEK) was charged to a 5 liter round bottom flask fitted with inlet ports and a condenser. The contents were heated to 75°C while being agitated with a paddle type agitator at a rate of 90 rpm and gently swept with nitrogen. After 30 minutes of sweep 0.94 g of TRIGONOX 125-C75 was charged (tert-butyl peroxy pivalate, available from AkzoNobel Company) to the kettle; subsequently 752 g of methyl methacrylate, 189 g of cyclohexyl methacrylate, 9.6 g of Trigonox 150-C75 (in 47 g of MEK) and 28 g of butyl mercaptopropionate were fed as three different streams over 3 hours, while maintaining the temperature at 75°C.

After completion of the feeds, the contents of the reaction flask were heated to 80°C and held at that temperature for 2 hrs. The typical conversion at this point is >98%. Subsequently, 4.3 g of TRIGONOX 150-C75 was added over a period of 2 hrs while the reaction flask was maintained at 80°C. Then the contents of the reaction flask were cooled to 50°C, poured into trays and dried to a solvent content of <5000 ppm. The resulting polymer mass was ground with a mortar and pestle and further dried to a solvent content less than <1000 ppm in a vacuum oven (<18" Hg and 75°C). The isolated polymethyl methacrylate was compounded with LEXAN 141R in a counter rotating LEISTRITZ twin screw extruder operating at 100 rpm. The barrel temperature ranged from 248°C, to 265°C at the die. The resulting strands were pelletized and dried overnight in a vacuum oven at 60°C. 1.5 mm plaques were pressed out of the compounded blend of LEXAN 141R polycarbonate and the Inventive Example 1 at a temperature of 170°C, and 5000 psi pressure. The plaques were held at that temperature and pressure for 2 minutes and demolded using a CARVER laboratory press. A plaque of LEXAN 141R was prepared using similar conditions. A laminate of 3 mm thickness was prepared by sandwiching the LEXAN 141R polycarbonate plaque and the plaque prepared from the blend, also using similar conditions. Haze, pencil scratch and impact were measured on the resulting specimen.

**TABLE 1. The composition, molecular weight and the calculated refractive index of the different acrylic modifiers and Lexan™ polycarbonate is listed in the Table below**

| **EXAMPLE** | **Composition wt%** | **Mw** | **RI** |
|---|---|---|---|
| LEXAN 141R Polycarbonate without additives (control) | polycarbonate | 49,000 | 1.58 |
| Mod. MMA 1 | 98%MMA / 3%BMP | 9,300 | 1.49 |

**Table 2: Illustrates the haze and pencil hardness and impact energy of the laminates prepared with LEXAN 141R polycarbonate and a 70/30 blend of LEXAN 141R: Mod. MMA1.**

| **Composition of each layer of the laminate** | | **Haze %** | **Pencil hardness** | **Total impact (energy to break. ft lbf)** |
|---|---|---|---|---|
| **Layer 1** | **Layer 2** | | | |
| LEXAN141R Polycarbonate (layer 1) - 100% | Lexan 141R 70 wt% and Mod. MMA 1 30 wt% | 1.7 | H | 4.0 |

### Test Methods

### Pencil Hardness

Hardness, as used herein, refers to hardness as determined according to ASTM D3363 - 05 "Standard Test Method for Film Hardness by Pencil Test." This standard test would be followed except that the test would be conducted on an injection molded test specimen in the shape of a plaque with dimensions 3 x 50 x 50 mm. The pencil would be held at a 45° angle and drawn across the surface of the plaque away from the operator starting with the hardest pencil with a load of 750 g. The substrate hardness would be reported as the hardness of the hardest pencil that did not scratch the surface. The pencil hardness scale from softer to harder is 2B, B, HB, F, H, 2H, 3H, etc.

### GPC

The term "molecular weight" as used refers to peak average molecular weight as determined by gel permeation chromatography against narrow molecular weight polystyrene standards in tetrahydrofuran solvent at 25° C using Polymer Laboratories' data manipulation software.

### DSC

The glass transition is measured in a TA INSTRUMENTS Q1000 Differential Scanning Calorimeter using a small sample of the polymer (5-20 mg) sealed in a small aluminum pan. The pan is placed in the DSC apparatus, and its heat flow response is recorded by scanning at a rate of 10° C/min from room temperature up to 180° C. The glass transition temperature is observed as a distinct shift in the heat flow curve.

### Haze

ASTM Standard Test Method for Haze and Luminous Transmittance of Transparent Plastics, D1003-11 was used for measuring the haze values of different specimens.

### Impact Resistance

ASTM Standard Test Method for Impact Resistance of Flat Rigid Plastic Specimens by Means of a Falling Dart, D5628-10 was used to determine the impact resistance of the different specimens.

The present invention may be embodied in other forms without departing from the essential attributes thereof, and, accordingly, reference should be made to the appended claims, rather than to the foregoing specification, as indicating the scope of the invention.

## Claims

1. A scratch resistant article comprising:
a blend which comprises
from 50 to 95 percent by weight polycarbonate; and
from 5 to 50 percent by weight modified methyl methacrylate polymer, wherein the modified methyl methacrylate polymer is selected from the group consisting of the modified methyl methacrylate homopolymer, modified methyl methacrylate copolymers, and combinations thereof;
wherein the modified methyl methacrylate polymer has one or more end groups provided by reaction with one or more chain transfer agents selected from the group consisting of mercapto esters,
wherein the modified methyl methacrylate polymer has a weight average molecular weight Mw from 5,000 to 100,000 g/mole as measured by gel permeation chromatography against narrow molecular weight polystyrene standards in tetrahydrofuran solvent at 25° C using Polymer Laboratories' data manipulation software; and
wherein the blend exhibits a pencil hardness equal to or greater than F measured according to ASTM D3363 - 05.

2. The scratch resistant article according to Claim 1, wherein the blend has a haze of equal to or less than 50%, measured according to ASTM D1003-11.

3. The scratch resistant article according to any one of the preceding claims, wherein the modified methyl methacrylate polymer is a modified methyl methacrylate copolymer which comprises equal to or greater than 70 percent by weight units derived from methyl methacrylate and between greater than one and equal to or less than 30 percent by weight of units derived from one or more monomers selected from the group consisting of (cyclo)alkyl (meth)acrylates, alkyl (meth)acrylates, aryl (meth)acrylates, styrene, and substituted styrene based monomers.

4. The scratch resistant article according to any one of the preceding claims, wherein the modified methyl methacrylate copolymer comprises equal to or greater than 70 percent by weight units derived from methyl methacrylate and between greater than one and equal to or less than 30 percent by weight units derived from of one or more monomer units selected from the group consisting of cyclohexyl methacrylate, isobornyl methacrylate, tetrahydrofurfuryl methacrylate, cyclopentyl methacrylate, hydroxy ethyl methacrylate, trifluoroethylmethacrylate, and dicyclopentadienyl methacrylate.

5. The scratch resistant article according to any one of the preceding claims, wherein the modified methyl methacrylate polymer is formed from the reaction of from 0.5 to 10 weight percent chain transfer agent based on the total weight of the methyl methacrylate polymer.

6. The scratch resistant article according to any one of the preceding claims, wherein the chain transfer agent is selected from the group consisting of butylmercaptopropionate, methylmercaptopropionate, and 2-ethylhexylthioglycolate.

7. The scratch resistant article according to any one of the preceding claims, wherein the modified methyl methacrylate is prepared by one or more free radical polymerization techniques selected from the group consisting of emulsion polymerization, suspension polymerization, dispersion polymerization, bulk polymerization, and solution polymerization.

8. The scratch resistant article according to any one of the preceding claims, wherein the modified methyl methacrylate polymer is prepared by solution polymerization.

9. The scratch resistant article according to any one of the preceding claims, wherein the modified methyl methacrylate polymer has a refractive index less than 1.52.

10. The scratch resistant article, according to any one of the preceding claims, wherein the article is produced by one or more methods selected from the group consisting of calendaring, extrusion, compression molding and injection molding.

11. The scratch resistant article, according to any one of the preceding claims, wherein the article is produced by one or more methods selected from the group consisting of extrusion, lamination, co-extrusion, cast extrusion, and blow molding.

12. A method for producing a scratch resistant article comprising:
forming a blend by melt blending, the blend comprising from 50 to 95 weight percent polycarbonate and from 5 to 50 weight percent modified methyl methacrylate polymer;
wherein the modified methyl methacrylate polymer is a modified methyl methacrylate homopolymer, modified methyl methacrylate copolymer or combination thereof, having one or more end groups provided by reaction with one or more chain transfer agents selected from the group consisting of mercapto esters, and
wherein the modified methyl methacrylate polymer has a weight average molecular weight Mw equal from 5,000 to 100,000 g/mole as measured by gel permeation chromatography against narrow molecular weight polystyrene standards in tetrahydrofuran solvent at 25° C using Polymer Laboratories' data manipulation software;
wherein the blend exhibits a pencil hardness equal to or greater than F measured according to ASTM D3363 - 05; and
forming the scratch resistant article from the blend by one or more methods selected from the group consisting of extrusion, injection molding, compression molding, and calendaring.

13. The method according to claim 12, wherein the blend has a haze of less than or equal to 50% measured according to ASTM D1003.

14. The method according to any one of claims 12-13, wherein the blend has a pencil hardness of equal to or greater than F measured according to ASTM D3363 - 05.

15. The method according to any of claims 12-14, wherein the modified methyl methacrylate polymer is a modified methyl methacrylate copolymer which comprises equal to or greater than 70 percent by weight units derived from methyl methacrylate and between greater than one and equal to or less than 30 percent by weight units derived from one or more monomers selected from the group consisting of alkyl (meth)acrylates, aryl (meth)acrylates, styrene, and substituted styrene based monomers.

## Patentansprüche

1. Ein kratzfester Artikel, beinhaltend:
eine Mischung, die Folgendes beinhaltet:
zu 50 bis 95 Gewichtsprozent Polycarbonat; und
zu 5 bis 50 Gewichtsprozent modifiziertes Methylmethacrylatpolymer,
wobei das modifizierte Methylmethacrylatpolymer aus der Gruppe, bestehend aus dem modifizierten Methylmethacrylathomopolymer, modifizierten Methylmethacrylatcopolymeren und Kombinationen davon, ausgewählt ist;
wobei das modifizierte Methylmethacrylatpolymer eine oder mehrere Endgruppen aufweist, die durch Zur-Reaktion-Bringen mit einem oder mehreren Kettenübertragungsmitteln, die aus der Gruppe, bestehend aus Mercaptoestern, ausgewählt sind, bereitgestellt werden,
wobei das modifizierte Methylmethacrylatpolymer ein Gewichtsmittel des Molekulargewichts Mw von 5 000 bis 100 000 g/Mol aufweist, wie mittels Gelpermeationschromatographie gegen Polystyrolstandards mit engem Molekulargewicht in Tetrahydrofuran-Lösungsmittel bei 25 °C unter Verwendung der Datenmanipulationssoftware von Polymer Laboratories gemessen; und
wobei die Mischung eine Bleistifthärte zeigt, die gleich oder größer als F ist, gemessen gemäß ASTM D3363-05.

2. Kratzfester Artikel gemäß Anspruch 1, wobei die Mischung eine Trübung von gleich oder weniger als 50 % aufweist, gemessen gemäß ASTM D1003-11.

3. Kratzfester Artikel gemäß einem der vorhergehenden Ansprüche, wobei das modifizierte Methylmethacrylatpolymer ein modifiziertes Methylmethacrylatcopolymer ist, das gleich oder mehr als 70 Gewichtsprozent von Methylmethacrylat abgeleitete Einheiten und zwischen mehr als 1 und gleich oder weniger als 30 Gewichtsprozent von einem oder mehreren Monomeren abgeleitete Einheiten, die aus der Gruppe, bestehend aus (Cyclo)alkyl(meth)acrylaten, Alkyl(meth)acrylaten, Aryl(meth)acrylaten, Styrol und substituierten Monomeren auf Styrolbasis, ausgewählt sind, beinhaltet.

4. Kratzfester Artikel gemäß einem der vorhergehenden Ansprüche, wobei das modifizierte Methylmethacrylatcopolymer gleich oder mehr als 70 Gewichtsprozent von Methylmethacrylat abgeleitete Einheiten und zwischen mehr als 1 und gleich oder weniger als 30 Gewichtsprozent von einer oder mehreren Monomereinheiten abgeleitete Einheiten, die aus der Gruppe, bestehend aus Cyclohexylmethacrylat, Isobornylmethacrylat, Tetrahydrofurfurylmethacrylat, Cyclopentylmethacrylat, Hydroxyethylmethacrylat, Trifluorethylmethacrylat und Dicyclopentadienylmethacrylat, ausgewählt sind, beinhaltet.

5. Kratzfester Artikel gemäß einem der vorhergehenden Ansprüche, wobei das modifizierte Methylmethacrylatpolymer aus der Reaktion von 0,5 bis 10 Gewichtsprozent Kettenübertragungsmittel, bezogen auf das Gesamtgewicht des Methylmethacrylatpolymers, gebildet wird.

6. Kratzfester Artikel gemäß einem der vorhergehenden Ansprüche, wobei das Kettenübertragungsmittel aus der Gruppe, bestehend aus Butylmercaptopropionat, Methylmercaptopropionat und 2-Ethylhexylthioglycolat, ausgewählt ist.

7. Kratzfester Artikel gemäß einem der vorhergehenden Ansprüche, wobei das modifizierte Methylmethacrylat durch eine oder mehrere radikalische Polymerisationstechniken hergestellt wird, die aus der Gruppe, bestehend aus Emulsionspolymerisation, Suspensionspolymerisation, Dispersionspolymerisation, Massepolymerisation und Lösungspolymerisation, ausgewählt sind.

8. Kratzfester Artikel gemäß einem der vorhergehenden Ansprüche, wobei das modifizierte Methylmethacrylatpolymer durch Lösungspolymerisation hergestellt wird.

9. Kratzfester Artikel gemäß einem der vorhergehenden Ansprüche, wobei das modifizierte Methylmethacrylatpolymer einen Brechungsindex von weniger als 1,52 aufweist.

10. Kratzfester Artikel gemäß einem der vorhergehenden Ansprüche, wobei der Artikel durch ein oder mehrere Verfahren hergestellt wird, die aus der Gruppe, bestehend aus Kalandrieren, Extrusion, Formpressen und Spritzgießen, ausgewählt sind.

11. Kratzfester Artikel gemäß einem der vorhergehenden Ansprüche, wobei der Artikel durch ein oder mehrere Verfahren hergestellt wird, die aus der Gruppe, bestehend aus Extrusion, Laminierung, Coextrusion, Gießextrusion und Blasformen, ausgewählt sind.

12. Ein Verfahren zur Herstellung eines kratzfesten Artikels, beinhaltend:
Bilden einer Mischung durch Schmelzmischen, wobei die Mischung zu 50 bis 95 Gewichtsprozent Polycarbonat und zu 5 bis 50 Gewichtsprozent modifiziertes Methylmethacrylatpolymer beinhaltet;
wobei das modifizierte Methylmethacrylatpolymer ein modifiziertes Methylmethacrylathomopolymer, ein modifiziertes Methylmethacrylatcopolymer oder eine Kombination davon ist, das eine oder mehrere Endgruppen aufweist, die durch das Zur-Reaktion-Bringen mit einem oder mehreren Kettenübertragungsmitteln, die aus der Gruppe, bestehend aus Mercaptoestern, ausgewählt sind, bereitgestellt werden, und
wobei das modifizierte Methylmethacrylatpolymer ein Gewichtsmittel des Molekulargewichts Mw von 5 000 bis 100 000 g/Mol aufweist, wie mittels Gelpermeationschromatographie gegen Polystyrolstandards mit engem Molekulargewicht in Tetrahydrofuran-Lösungsmittel bei 25 °C unter Verwendung der Datenmanipulationssoftware von Polymer Laboratories gemessen;
wobei die Mischung eine Bleistifthärte von gleich oder größer als F zeigt, gemessen gemäß ASTM D3363-05; und
Bilden des kratzfesten Artikels aus der Mischung durch ein oder mehrere Verfahren, die aus der Gruppe, bestehend aus Extrusion, Spritzgießen, Formpressen und Kalandrieren, ausgewählt sind.

13. Verfahren gemäß Anspruch 12, wobei die Mischung eine Trübung von weniger als oder gleich 50 % aufweist, gemessen gemäß ASTM D1003.

14. Verfahren gemäß einem der Ansprüche 12-13, wobei die Mischung eine Bleistifthärte von gleich oder größer als F aufweist, gemessen gemäß ASTM D3363-05.

15. Verfahren gemäß einem der Ansprüche 12-14, wobei das modifizierte Methylmethacrylatpolymer ein modifiziertes Methylmethacrylatcopolymer ist, das gleich oder mehr als 70 Gewichtsprozent von Methylmethacrylat abgeleitete Einheiten und zwischen mehr als 1 und gleich oder weniger als 30 Gewichtsprozent von einem oder mehreren Monomeren abgeleitete Einheiten, die aus der Gruppe, bestehend aus Alkyl(meth)acrylaten, Aryl(meth)acrylaten, Styrol und substituierten Monomeren auf Styrolbasis, ausgewählt sind, beinhaltet.

## Revendications

1. Un article résistant aux rayures comprenant :
un mélange homogène qui comprend
de 50 à 95 pour cent en poids de polycarbonate ; et
de 5 à 50 pour cent en poids de polymère de méthacrylate de méthyle modifié, le polymère de méthacrylate de méthyle modifié étant sélectionné dans le groupe consistant en l'homopolymère de méthacrylate de méthyle modifié, des copolymères de méthacrylate de méthyle modifiés, et des combinaisons de ceux-ci ;
le polymère de méthacrylate de méthyle modifié ayant un ou plusieurs groupes terminaux fournis par réaction avec un ou plusieurs agents de transfert de chaîne sélectionnés dans le groupe consistant en des esters mercapto,
le polymère de méthacrylate de méthyle modifié ayant une masse moléculaire moyenne en poids Mw allant de 5 000 à 100 000 g/mole telle que mesurée par chromatographie par perméation sur gel par rapport à des étalons de polystyrène de masses moléculaires étroites dans du solvant tétrahydrofurane à 25 °C à l'aide d'un logiciel de manipulation de données de Polymer Laboratories ; et
le mélange homogène présentant une dureté au crayon égale à ou plus grande que F mesurée selon l'ASTM D3363-05.

2. L'article résistant aux rayures selon la revendication 1, dans lequel le mélange homogène a un trouble égal à ou de moins de 50 %, mesuré selon l'ASTM D1003-11.

3. L'article résistant aux rayures selon l'une quelconque des revendications précédentes, dans lequel le polymère de méthacrylate de méthyle modifié est un copolymère de méthacrylate de méthyle modifié qui comprend un pourcentage égal à ou plus grand que 70 pour cent en poids d'unités dérivées du méthacrylate de méthyle et un pourcentage compris entre plus grand que un et égal à ou de moins de 30 pour cent en poids d'unités dérivées d'un ou de plusieurs monomères sélectionnés dans le groupe consistant en des (méth)acrylates de (cyclo)alkyle, des (méth)acrylates d'alkyle, des (méth)acrylates d'aryle, le styrène, et des monomères à base de styrène substitué.

4. L'article résistant aux rayures selon l'une quelconque des revendications précédentes, dans lequel le copolymère de méthacrylate de méthyle modifié comprend un pourcentage égal à ou plus grand que 70 pour cent en poids d'unités dérivées de méthacrylate de méthyle et un pourcentage compris entre plus grand que un et égal à ou de moins de 30 pour cent en poids d'unités dérivées d'une ou de plusieurs unités de monomère sélectionnées dans le groupe consistant en le méthacrylate de cyclohexyle, le méthacrylate d'isobornyle, le méthacrylate de tétrahydrofurfuryle, le méthacrylate de cyclopentyle, le méthacrylate d'hydroxyéthyle, le méthacrylate de trifluoroéthyle, et le méthacrylate de dicyclopentadiényle.

5. L'article résistant aux rayures selon l'une quelconque des revendications précédentes, dans lequel le polymère de méthacrylate de méthyle modifié est formé à partir de la réaction de 0,5 à 10 pour cent en poids d'un agent de transfert de chaîne rapporté au poids total du polymère de méthacrylate de méthyle.

6. L'article résistant aux rayures selon l'une quelconque des revendications précédentes, dans lequel l'agent de transfert de chaîne est sélectionné dans le groupe consistant en le mercaptopropionate de butyle, le mercaptopropionate de méthyle, et le thioglycolate de 2-éthylhexyle.

7. L'article résistant aux rayures selon l'une quelconque des revendications précédentes, dans lequel le méthacrylate de méthyle modifié est préparé par une ou plusieurs techniques de polymérisation radicalaire sélectionnées dans le groupe consistant en la polymérisation en émulsion, la polymérisation en suspension, la polymérisation en dispersion, la polymérisation en masse, et la polymérisation en solution.

8. L'article résistant aux rayures selon l'une quelconque des revendications précédentes, dans lequel le polymère de méthacrylate de méthyle modifié est préparé par polymérisation en solution.

9. L'article résistant aux rayures selon l'une quelconque des revendications précédentes, dans lequel le polymère de méthacrylate de méthyle modifié a un indice de réfraction de moins de 1,52.

10. L'article résistant aux rayures, selon l'une quelconque des revendications précédentes, l'article étant produit par un ou plusieurs procédés sélectionnés dans le groupe consistant en le calandrage, l'extrusion, le moulage par compression et le moulage par injection.

11. L'article résistant aux rayures, selon l'une quelconque des revendications précédentes, l'article étant produit par un ou plusieurs procédés sélectionnés dans le groupe consistant en l'extrusion, la stratification, la coextrusion, l'extrusion par coulage, et le moulage par soufflage.

12. Un procédé de production d'un article résistant aux rayures comprenant :
la formation d'un mélange homogène par réalisation d'un mélange homogène à l'état fondu, le mélange homogène comprenant de 50 à 95 pour cent en poids de polycarbonate et de 5 à 50 pour cent en poids de polymère de méthacrylate de méthyle modifié ;
le polymère de méthacrylate de méthyle modifié étant un homopolymère de méthacrylate de méthyle modifié, un copolymère de méthacrylate de méthyle modifié ou une combinaison de ceux-ci, ayant un ou plusieurs groupes terminaux fournis par réaction avec un ou plusieurs agents de transfert de chaîne sélectionnés dans le groupe consistant en des esters mercapto, et
le polymère de méthacrylate de méthyle modifié ayant une masse moléculaire moyenne en poids Mw allant de 5 000 à 100 000 g/mole telle que mesurée par chromatographie par perméation sur gel par rapport à des étalons de polystyrène de masses moléculaires étroites dans du solvant tétrahydrofurane à 25 °C à l'aide d'un logiciel de manipulation de données de Polymer Laboratories ;
le mélange homogène présentant une dureté au crayon égale à ou plus grande que F mesurée selon l'ASTM D3363-05 ; et
la formation de l'article résistant aux rayures à partir du mélange homogène par un ou plusieurs procédés sélectionnés dans le groupe consistant en l'extrusion, le moulage par injection, le moulage par compression, et le calandrage.

13. Le procédé selon la revendication 12, dans lequel le mélange homogène a un trouble de moins de ou égal à 50 % mesuré selon l'ASTM D1003.

14. Le procédé selon l'une quelconque des revendications 12 à 13, dans lequel le mélange homogène a une dureté au crayon égale à ou plus grande que F mesurée selon l'ASTM D3363-05.

15. Le procédé selon l'une quelconque des revendications 12 à 14, dans lequel le polymère de méthacrylate de méthyle modifié est un copolymère de méthacrylate de méthyle modifié qui comprend un pourcentage égal à ou plus grand que 70 pour cent en poids d'unités dérivées de méthacrylate de méthyle et un pourcentage compris entre plus grand que un et égal à ou de moins de 30 pour cent en poids d'unités dérivées d'un ou de plusieurs monomères sélectionnés dans le groupe consistant en des (méth)acrylates d'alkyle, des (méth)acrylates d'aryle, le styrène, et des monomères à base de styrène substitué.
